# EUROPEAN PATENT APPLICATION

(11) **EP 4 645 020 A1**
(43) Date of publication of application: **05.11.2025**
(21) Application number: 23911817.7
(22) Date of filing: 18.12.2023
(51) Int. Cl.: G05D 1/43

(54) **MOVABLE BODY**

(30) Priority: 27.12.2022 JP 2022209670
(71) Applicant: KYOCERA Document Solutions Inc., Osaka-shi, Osaka 540-8585 (JP)
(72) Inventor: KONISHI, Hidehisa, Osaka-shi, Osaka 540-8585 (JP)
(74) Representative: Winter, Brandl - Partnerschaft mbB
(86) International application number: PCT/JP2023/045259
(87) International publication number: WO 2024/143036

(57) **Abstract**

A scanner 12a is arranged on a side of a bottom surface of this mobile body 1 facing a floor surface, and repeatedly generates as a first floor surface image a line image with a predetermined width that perpendicular to a moving direction of this mobile body 1; and a controller controls a driving device in order to reduce an error between a current position of this mobile body 1 detected on the basis of the first floor surface image and a predetermined route such that this mobile body 1 runs on the route. Further, the caster 11 that includes a driven wheel that contacts with the floor surface, and the scanner 12a are fixed to the frame body 13.

## Description

### Technical Field

The present invention relates to a mobile body.

### Background Art

A mobile device includes movement means for moving this device along a surface of a structure, imaging means installed on a bottom surface of this device, for imaging the surface of the structure, and determining means for comparing image data outputted from the imaging means with reference data that has been registered of each position and thereby determining a position of this device (see PATENT LITERATURE #1, for example).

### Citation list

### Patent literature

PATENT LITERATURE #1: Japan Patent Application Publication No. 2019-185465.

### Summary of invention

### Technical problem

However, in the aforementioned mobile device, due to an own weight of the mobile device, the mobile device deforms along a shape of a floor surface and thereby a distance from the floor surface (structure surface) to the bottom surface of the mobile device changes, and if the floor surface (structure surface) becomes out of a depth of field of the imaging means, then a photograph image gets blur and a current position of the mobile device may not be correctly determined.

The present invention has been conceived in view of the aforementioned problem, and it is an object of the present invention to obtain a mobile body of which a current position is correctly determined.

### Solution to problem

A mobile body according to the present invention includes a driving device that generates a driving force for running; a scanner that optically scans a floor surface and generates a first floor surface image; a controller that controls the driving device in order to reduce an error between a current position of this mobile body detected on the basis of the first floor surface image and a predetermined route such that this mobile body runs on the route; a frame body with a frame structure; and a caster that includes a driven wheel that contacts with the floor surface. The scanner (a) is arranged on a bottom surface side of this mobile body facing the floor surface, and (b) repeatedly generates as the first floor surface image a line image with a predetermined width that perpendicular to a moving direction of this mobile body; and
Further, the caster and the scanner are fixed to the frame body.

### Advantageous effect of invention

By means of the present invention, obtained is a mobile body of which a current position is correctly determined.

These and other objects, features and advantages of the present invention will become more apparent upon reading of the following detailed description along with the accompanied drawings.

### Brief description of drawings

[Figure 1] Fig. 1 shows a perspective-view diagram that indicates a mobile body according to an embodiment of the present invention.
[Figure 2] Fig. 2 shows a perspective-view diagram that indicates a mechanical configuration of the mobile body shown in Fig. 1.
[Figure 3] Fig. 3 shows a diagram that indicates a configuration of a scanner in the mobile body according to Embodiment 1.
[Figure 4] Fig. 4 shows a perspective-view diagram that indicates an electronic configuration of the mobile body shown in Fig. 1.
[Figure 5] Fig. 5 shows a diagram that indicates an example of a floor surface.
[Figure 6] Fig. 6 shows a diagram that indicates a configuration of a scanner in the mobile body according to Embodiment 2.
[Figure 7] Fig. 7 shows a diagram that indicates another example of a floor surface.
[Figure 8] Fig. 8 shows a side-view diagram that indicates a mobile body according to Embodiment 4.

### Description of embodiments

Hereinafter, embodiments according to aspects of the present invention will be explained with reference to a drawing.

### Embodiment 1.

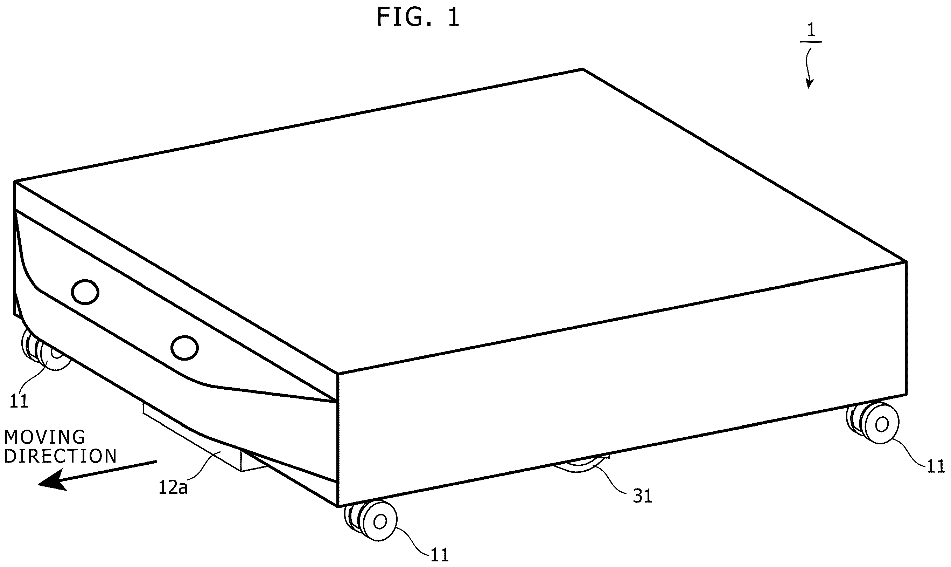

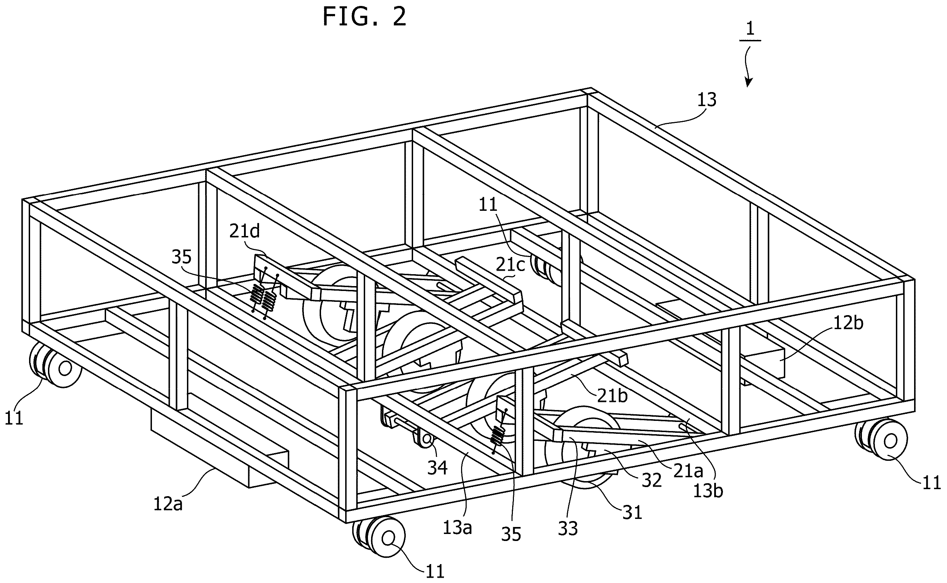

Fig. 1 shows a perspective-view diagram that indicates a mobile body according to an embodiment of the present invention. Fig. 2 shows a perspective-view diagram that indicates a mechanical configuration of the mobile body shown in Fig. 1.

A mobile body 1 shown in Fig. 1 is a self-running mobile body, an AGV (Automatic Guided Vehicle), an AMR (Autonomous Mobile Robot), or the like. As shown in Fig. 2, this mobile body 1 includes four casters 11 arranged at four corners of its bottom surface, scanners 12a, 12b, and a frame body 13 to which the casters 11 and the scanners 12a, 12b are fixed.

The caster 11 includes a driven wheel that contacts with a floor surface, and is fixed to the frame body 13 so as to be rotatable.

The scanner 12a optically scans the floor surface and thereby generates a first floor surface image. The scanner 12a is arranged in a front end part of this mobile body 1 in the moving direction. The scanner 12b optically scans the floor surface and thereby generates a second floor surface image. The scanner 12b is arranged in a rear end part of this mobile body 1 in its moving direction.

Each of the scanners 12a, 12b (a) is arranged on a bottom surface side of this mobile body 1 facing the floor surface, and (b) repeatedly generates as the first or second floor surface image a line image with a predetermined width that perpendicular to a moving direction of this mobile body 1.

The scanners 12a, 12b scan the floor surface with a predetermined high resolution (e.g. 600 dpi).

The frame body 13 is a body with a frame structure. For example, the frame body 13 is obtained by pressing a metal pipe such as steel pipe into a shape. For example, as shown in Fig. 2, the casters 11 and the scanners 12a, 12b are fixed on a bottom surface of the frame body 13.

Further, this mobile body 1 includes driving wheel units 21a, 21b, 21c, 21d.

Each of the driving wheel units 21a, 21b, 21c, 21d includes a driving wheel 31 that contacts with the floor surface, a supporting unit 32 that supports the driving wheel 31 so as to be rotatable, a wheel frame unit 33 fixed to the supporting unit 32, a rotatable supporting unit 34 that fixes an end of the wheel frame unit 33 to the frame body 13 (one of beams 13a, 13b) so as to be rotatable, and a spring member 35 that provides a force to the other end of the wheel frame unit 33 toward the frame body 13 (the other of the beams 13a, 13b).

Consequently, by a restoring force of the spring member 35, the driving wheel 31 is pushed to the floor surface with a predetermined pressure.

Further, each of the driving wheel units 21a, 21b, 21c, 21d includes a driving device (not shown) that generates and transmits a driving force for running to the driving wheel 31. The driving devices are individually arranged to the driving wheel units 21a, 21b, 21c, 21d, respectively, and individually generate and transmit driving forces to the driving wheels 31. Here, the driving device generates the driving force using a motor, and transmits the driving force to the driving wheel 31 using a gear or the like.
For example, the driving wheel 31 includes a driving shaft that connects to the driving device, a rigid wheel fixed to the driving shaft, and an elastic tire fitted around outside of the wheel.

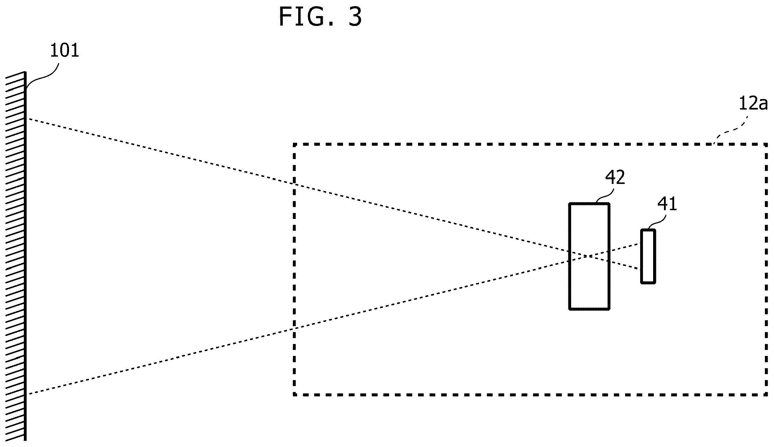

Fig. 3 shows a diagram that indicates a configuration of a scanner in the mobile body according to Embodiment 1.

In Embodiment 1, as shown in Fig. 3, for example, each of the scanners 12a, 12b includes a light emitting unit (not shown) that emits light to the floor surface, an image sensor 41, a shrinking optical system 42 (single or plural lenses) that converges to the image sensor 41 reflection light obtained by reflection of light from the light emitting unit on the floor surface.

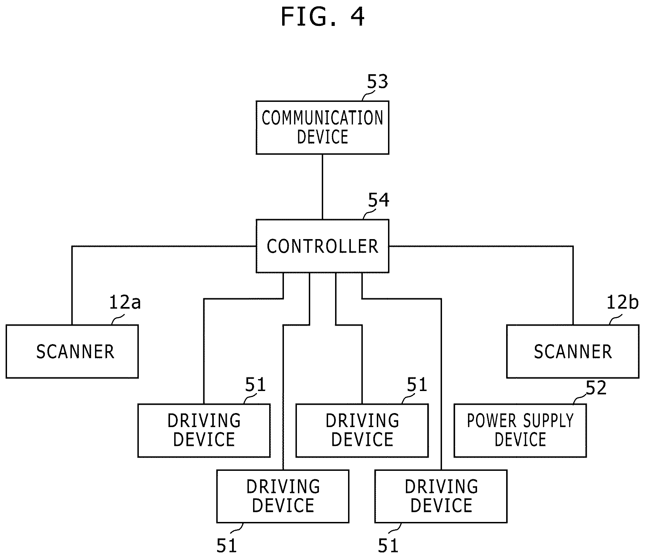

Fig. 4 shows a perspective-view diagram that indicates an electronic configuration of the mobile body shown in Fig. 1. As shown in Fig. 4, the mobile body 1 includes not only the aforementioned driving devices 51 but a power supply device 52, a communication device 53, and a controller 54.

The power supply device 52 includes a secondary battery, for example, and supplies electric power to the driving devices 51, the communication device 53, and the controller 54. The power supply device 52 may include a charging circuit that is connected to a commercial power supply and charges the secondary battery. Further, the secondary battery may be detachable.

The communication device 53 performs data communication with an external device (server or the like) with wireless communication in accordance with a predetermined protocol.

The controller 54 includes a computer and/or an ASIC (Application Specific Integrated Circuit), and performs a data process, control of the driving devices 51, control of the communication device 53, and the like using the computer (software processing) and/or the ASIC (hardware processing).

The controller 54 controls the driving devices 51 in order to reduce an error between a current position of this mobile body 1 detected on the basis of the aforementioned first floor surface image (here, on the basis of the aforementioned first and second floor surface images) and a route such that this mobile body 1 runs on the route. Further, the controller 54 stops this mobile body 1 at a predetermined position (an end of the route or an intermediate point) on the basis of the current position of this mobile body 1 detected on the basis of the first floor surface image.

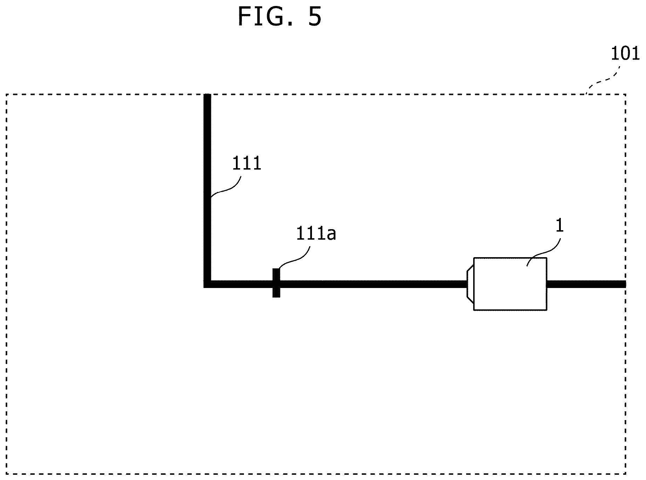

In Embodiment 1, the controller 54 detects the error between the current position of this mobile body 1 and the route on the basis of the first floor surface image. Fig. 5 shows a diagram that indicates an example of a floor surface. As shown in Fig. 5, for example, installed are a linear marker 111 (tape or the like) that indicates the route on the floor surface 101 and a marker 111a that indicates a stop position. Further, the controller 54 detects an edge of an image of the marker 111 in the first floor surface image, derives an error from the route in a perpendicular direction to the moving direction on the basis of a position of the edge in the first floor surface image and derives a slope of the moving direction to the route on the basis of the slope of the edge, and controls the driving devices 51 so as to reduce the error and the slope.

If a rotation speed of the driving wheels 31 of the driving wheel units 21a, 21b and a rotation speed of the driving wheels 31 of the driving wheel units 21c, 21d are set to be equal to each other, then the mobile body 1 runs straight; and if a rotation speed of the driving wheels 31 of the driving wheel units 21a, 21b and a rotation speed of the driving wheels 31 of the driving wheel units 21c, 21d are set to be different from each other, then the mobile body 1 turns. Therefore, so as to reduce the aforementioned error and slope, the driving device 51 of each of the driving wheel units 21a, 21b, 21c, 21d is controlled.

Further, the slope of the moving direction to the route may be derived on the basis of both the error obtained from the first floor surface image and the error obtained from the second floor surface image.

Furthermore, when the controller 54 detects an image of the marker 111a in the first floor surface image using pattern matching or the like, the controller 54 controls the driving devices 51 and thereby stops the mobile body 1.

In the following part, a behavior of the mobile body 1 according to Embodiment 1 is explained.

In the mobile body 1, when the controller 54 detects a user operation to an unshown input device (switch or the like) or receives a starting instruction using the communication device 53, the controller 54 controls the driving devices 51 and thereby starts running of the mobile body 1.

Subsequently, the scanner 12a (and the scanner 12b) repeatedly generates as the first floor surface image (and the second floor surface image) a line image, and the controller 54 determines an error of a current position of the mobile body 1 from a route on the basis of the first floor surface image (and the second floor surface image), and controls the driving devices 51 so as to reduce the error and continues running of the mobile body 1.

Further, if the controller 54 determines that the current position of the mobile body 1 is a stop position on the basis of the first floor surface image (and the second floor surface image), then the controller 54 stops the driving devices 51 and thereby stops the mobile body 1.

As mentioned, in the aforementioned Embodiment 1, the scanner 12a (a) is arranged on a bottom surface side of this mobile body 1 facing the floor surface 101, and (b) repeatedly generates as the first floor surface image a line image with a predetermined width that perpendicular to a moving direction of this mobile body 1; and the controller 54 controls the driving devices 51 in order to reduce an error between a current position of this mobile body 1 detected on the basis of the first floor surface image and a predetermined route such that this mobile body 1 runs on the route. Further, the caster 11 that includes a driven wheel that contacts with the floor surface, and the scanner 12a are fixed to the frame body 13.

Consequently, the caster 11 and the scanner 12a are fixed to the highly rigid frame body 13, and a distance from a floor surface that the caster 11 contacts with to the scanner 12a hardly changes, and therefore, the floor surface tends not to become out of a depth of field of the scanner 12a and a floor surface image under the mobile body 1 is favorably obtained with a high resolution, and consequently, the mobile body 1 can be correctly stopped at a desired position.

### Embodiment 2.

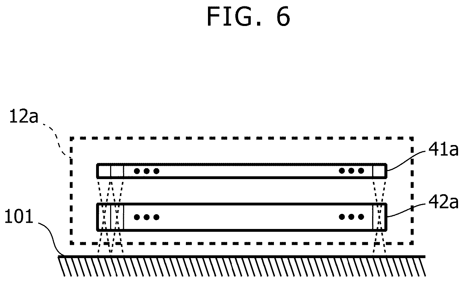

Fig. 6 shows a diagram that indicates a configuration of a scanner in the mobile body according to Embodiment 2. In Embodiment 2, the scanner 12a or 12 includes a contact image sensor, as shown in Fig. 6, for example. Therefore, in Embodiment 2, the scanner 12a or 12 is a scanner of an equal magnification optical system that includes a line sensor 41a that includes plural photodetector elements, and a lens array 42a.

Other parts of the configuration and behaviors of the mobile body according to Embodiment 2 are identical or similar to those in Embodiment 1, and therefore not explained here.

### Embodiment 3.

In Embodiment 3, in accordance with a request from the controller 54, the communication device 53 (a) transmits the first floor surface image (image data) to a predetermined server, and receives either the error between the current position of this mobile body 1 and the route or a control amount corresponding to the error, that is detected by the server on the basis of the first floor surface image. Further, the controller 54 controls the driving devices 51 such that this mobile body 1 runs on the aforementioned route on the basis of the error or the control amount (control amount for each driving device 51).

In Embodiment 3, the server maintains a floor surface image of a whole area of the floor surface (i.e. a movement area of the mobile body 1), determines a position of the first floor surface image (i.e. a partial floor surface image transmitted and received from the mobile body 1) in the floor surface image using pattern matching or the like, and determines an actual current position corresponding to this position. Further, the server maintains route information of the mobile body 1, and determines an error between a route based on the route information and the current position, and transmits either the error or the corresponding control amount to the mobile body 1. Here, line images of a predetermined number of lines are transmitted as the first floor surface image to the server 1.

Further, if the derived current position agrees with a preset stop position, then the server transmits a stopping instruction to the mobile body 1, and in the mobile body 1, if the stopping instruction is received by the communication device 53, the controller 54 stops the driving devices 51 and thereby stops the mobile body 1.

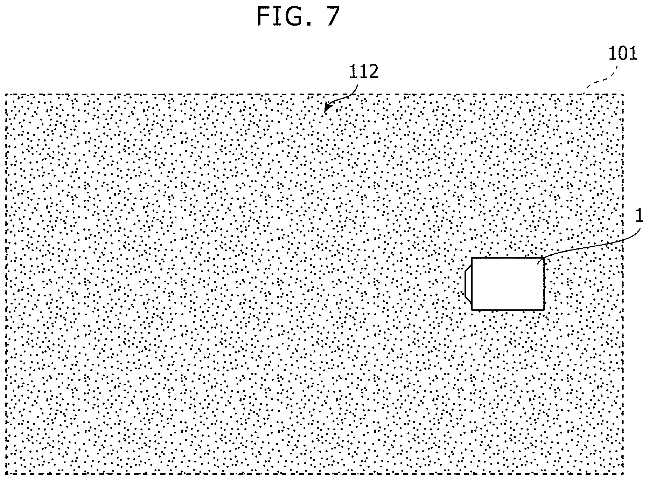

Fig. 7 shows a diagram that indicates another example of a floor surface. For example, the floor surface 101 has not only an original pattern 112 (i.e. surface pattern of floor material such as tile or concrete) but a scratch, a stain or the like, and therefore, in the high resolution surface image, image patterns at different positions are different. Therefore, on the basis of the first floor surface image, a current position of the mobile body 1 can be determined.

Here, although the first floor surface image is transmitted to the server, the first and second floor surface images may be transmitted to the server as well, and current positions may be derived of the respective first and second floor surface images as well.

Further, the first floor surface image (and the second floor surface image) may be transmitted after compressing them in the mobile body 1, and may be decompressed in the server.

Furthermore, without using the aforementioned server, the mobile body 1 may maintain a floor surface image of a whole area of the floor surface (i.e. a movement area of the mobile body 1), determine a position of the first floor surface image in the floor surface image, and determine an actual current position corresponding to this position.

Other parts of the configuration and behaviors of the mobile body according to Embodiment 3 are identical or similar to those in Embodiment 1 or 2, and therefore not explained here.

### Embodiment 4.

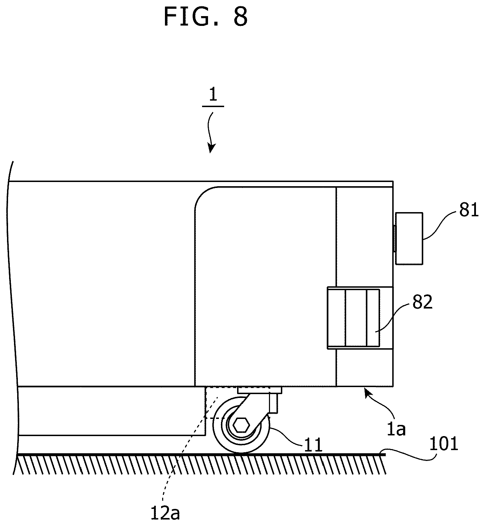

Fig. 8 shows a side-view diagram that indicates a mobile body according to Embodiment 4. In Embodiment 4, the mobile body 1 includes a housing 1a that protrudes over the caster 11 and the scanner 12a in a frontward direction, an infrared sensor 81 for collision prevention, and a main switch 82. The infrared sensor 81 and the main switch 82 are arranged in a front end of a frontward side of the housing 1a as shown in Fig. 8, for example. If an obstacle or the like is detected by the infrared sensor 81, the controller 54 makes an emergency stop of this mobile body 1.

As shown in Fig. 8, for example, since the housing 1a protrudes over the scanner 12a in the frontward direction, environmental light tends not to enter the scanner 12a.

Other parts of the configuration and behaviors of the mobile body according to Embodiment 4 are identical or similar to those in any of Embodiments 1 to 3, and therefore not explained here.

Further, it should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in the aforementioned embodiment, the scanner 12b may not be installed.

### Industrial applicability

For example, the present invention is applicable to a mobile body.

## Claims

1. A mobile body, comprising:
a driving device that generates a driving force for running;
a scanner that optically scans a floor surface and generates a first floor surface image;
a controller that controls the driving device in order to reduce an error between a current position of this mobile body detected on the basis of the first floor surface image and a predetermined route such that this mobile body runs on the route;
a frame body with a frame structure; and
a caster that comprises a driven wheel that contacts with the floor surface;
wherein the scanner (a) is arranged on a bottom surface side of this mobile body facing the floor surface, and (b) repeatedly generates as the first floor surface image a line image with a predetermined width that perpendicular to a moving direction of this mobile body; and the caster and the scanner are fixed to the frame body.

2. The mobile body according to claim 1, wherein the scanner comprises a light emitting unit, an image sensor, a shrinking optical system that converges to the image sensor reflection light obtained by reflection of light from the light emitting unit on the floor surface.

3. The mobile body according to claim 1, wherein the scanner comprises a contact image sensor.

4. The mobile body according to claim 1, wherein the controller detects the error between the current position of this mobile body and the route on the basis of the first floor surface image.

5. The mobile body according to claim 1, further comprising a communication device;
wherein the communication device (a) transmits the first floor surface image to a predetermined server, and receives either the error between the current position of this mobile body and the route or a control amount corresponding to the error, that is detected by the server on the basis of the first floor surface image; and
the controller controls the driving device such that this mobile body runs on the predetermined route on the basis of either the error or the control amount.

6. The mobile body according to claim 1, further comprising a rear end scanner that is arrange in a rear end part of this mobile body in the moving direction and optically scans the floor surface and generates a second floor surface image;
wherein the scanner is arranged in a front end part of this mobile body in the moving direction;
the rear end scanner repeatedly generates as the second floor surface image a line image with a predetermined width perpendicular to the moving direction of this mobile body; and
the controller controls the driving device in order to reduce an error between a current position of this mobile body detected on the basis of the first and second floor surface images and the route such that this mobile body runs on the route.

7. The mobile body according to claim 1, further comprising a housing that protrudes over the caster and the scanner 12a in a frontward direction; and an infrared sensor that is arranged in a front end of the housing for collision prevention.
